# EUROPEAN PATENT SPECIFICATION

(11) **EP 3 074 326 B1**
(45) Date of publication and mention of the grant of the patent: **17.03.2021**
(21) Application number: 14865523.6
(22) Date of filing: 24.11.2014
(51) Int. Cl.: B65F 1/10, B65F 5/00

(54) **METHOD FOR FEEDING IN AND FOR HANDLING MATERIAL, AN INPUT POINT AND A WASTES CONVEYING SYSTEM**
VERFAHREN ZUM EINFÜHREN UND HANDHABEN EINES MATERIALS, EINFÜHRPUNKT UND ABFALLFÖRDERSYSTEM
PROCÉDÉ PERMETTANT DE FAIRE AVANCER ET DE MANIPULER UN MATÉRIAU, POINT D'ENTRÉE ET SYSTÈME DE TRANSPORT DE DÉCHETS

(30) Priority: 26.11.2013 FI 20136176; 24.02.2014 FI 20145175
(43) Date of publication of application: 05.10.2016
(73) Proprietor: Maricap OY, 01450 Vantaa (FI)
(72) Inventor: SUNDHOLM, Göran, FI-04310 Tuusula (FI)
(74) Representative: Papula Oy
(86) International application number: PCT/FI2014/050894
(87) International publication number: WO 2015/079104

(56) References cited:
- WO-A1-95/26919
- WO-A1-2009/063130
- WO-A1-2011/099929
- WO-A1-2012/117146
- DE-A1- 2 462 069
- KR-A- 20090 127 471
- KR-A- 20100 094 645

## Description

### Field of the invention

The invention relates to input point as defined in the preamble of claim 1.

The invention also relates to a method as defined in the preamble of claim 10. The invention also relates to a system as defined in claim 9.

### Background of the invention

The invention relates generally to material conveying systems, such as to pneumatic partial-vacuum transporting systems, more particularly to the collection and conveying of wastes, such as to the conveying of household wastes. Such systems are presented in publications WO 2009/080880, WO 2009/080881, WO 2009/080882, WO 2009/080883, WO 2009/080884, WO 2009/080885, WO 2009/080886, WO 2009/080887 and WO 2009/080888, among others. The invention also relates to waste feeding means, such as to input points or refuse chutes, with which waste is conveyed, typically by gravity, e.g. from higher input apertures in residential buildings to a lower collection space or corresponding container.

Systems wherein wastes are conveyed in piping by means of a pressure difference or suction are known in the art. In these, wastes are conveyed long distances in the piping by sucking. It is typical to these systems that a partial-vacuum apparatus is used to bring about a pressure difference, in which apparatus negative pressure is brought about in the conveying pipe with partial-vacuum generators, such as with a fan, with vacuum pumps or with an ejector apparatus. A conveying pipe typically comprises at least one valve means, by opening and closing which the replacement air coming into the conveying pipe is regulated. Waste input points, e.g. rubbish containers or refuse chutes, are used in the systems at the waste material input end, into which waste input points material, such as waste material, is fed and from which waste input points the material to be conveyed is conveyed into a conveying pipe by opening a discharge valve means, in which case, by means of the sucking effect brought about by means of the partial vacuum acting in the conveying pipe and also by means of the surrounding air pressure acting via the refuse chute, material such as e.g. waste material packed into bags, is conveyed from the refuse chute into the conveying pipe and onwards to a reception point, where the material to be transported is separated from the transporting air and conveyed for further processing or e.g. into a shipping container. The pneumatic wastes conveying systems in question can be utilized particularly well in densely populated urban areas. These types of areas have tall buildings, in which the input of wastes into a pneumatic conveying system for wastes is performed via an input point, such as a refuse chute arranged, in the building.

Material can be conducted from an input point along a refuse chute into a container that is lower in the vertical direction, or an intermediate container can be in connection with the input points, into which intermediate container material fed from an input point is initially conducted and from where the waste material is conveyed onwards along the conveying piping to a reception point.

Input points have an openable and closable hatch, in connection with which there must be a safety arrangement. WO2011/099929A1 discloses an input point according to the preamble of claim 1, comprising an insertion aperture for a pneumatic waste conveying system. A hatch is provided for partially closing the input aperture. WO2011/099929A1 also discloses a method according to the preamble of claim 10.

The aim of the present invention is to achieve a completely new type of solution in connection with the input points of a wastes conveying system, by means of which solution the drawbacks of prior art solutions are avoided. One aim of the invention is to achieve a solution with which the hatches that are in connection with an input point can be opened and closed more efficiently than earlier and safely.

### Brief description of the invention

The invention is based on a concept in which a counterpart is arranged in the channel part of an input point, said counterpart being movably supported on the structures of the input point and in contact with the shut-off means in its closed position, said shut-off means arranged inside the channel part movable in the direction of the channel part.

The input point according to the invention is defined in claim 1.

Preferred embodiments of the input point according to the invention are defined in claims 2 - 8.

The method according to the invention is defined in claim 10.

Preferred embodiments of the method according to the invention are defined in claims 11 - 18.

The system according to the invention is defined in claim 9.

The input point according to the invention has a number of important advantages. With the shut-off means arrangement the force effects resisting the opening or closing of a shut-off means can be essentially reduced. By arranging a shut-off means to be a bushing means, which can be moved in the channel space of the channel part of an input point, a solution that is functionally effective, and efficient in terms of manufacturing technology, is accomplished for opening and closing the input aperture and/or a replacement-air aperture of an input point. With the shut-off means according to an embodiment of the invention it is possible to keep the surface area of the shut-off means small, said surface area resisting the opening or closing of the input aperture and/or replacement-air aperture owing to the pressure difference and/or replacement air flow. The first shut-off means or the second shut-off means can be moved with relatively small forces, in which case the drive devices of the shut-off means can be formed to be smaller than earlier in terms of their power. The solution also enables the replacement-air aperture to be made the shape or size desired. By arranging a counterpart, such as a cover part movably supported on the input point or on the structures of it, on which counterpart is a countersurface for the shut-off means and sensor means or limit switch means to control or stop the movement of the shut-off means towards the first position, a safety arrangement can be achieved in connection with the input aperture, with which safety arrangement overpowerful closing of the shut-off means is prevented if an object or part has remained between the input aperture and the shut-off means. In the solution according to the invention gravity to keep the counterpart in place and if something is between the shut-off means and the counterpart the counterpart rises upwards. In this case the shut-off means and the counterpart form in the first position together form means for closing the input aperture. The counterpart is e.g. approx. 25-50mm from the top edge of the input aperture, so that an undesired object, such as fingers, are not squashed between the edge of the input aperture and the shut-off means when the counterpart and the sensor reacting to its position give a signal for the control of the drive means of the shut-off means.

The input points, which are the input points of waste, such as waste receptacles or refuse chutes, can be used for feeding in material. The method and apparatus according to the invention are particularly well suited in connection with conveying systems of waste material, such as waste material arranged in bags.

### Brief description of the figures

In the following, the invention will be described in more detail by the aid of an embodiment with reference to the attached drawings, wherein
Fig. 1a presents a simplified front view of an embodiment of an input point according to the invention, from the direction A of Fig. 1b,
Fig. 1b presents a simplified side view of an embodiment of an input point according to the invention, from the direction B of Fig. 1a,
Fig. 1c presents a simplified rear view of an embodiment of an input point according to the invention, from the direction C of Fig. 1b,
Fig. 1d presents a cross-section along the line Id-Id of Fig. 1c,
Fig. 2 presents a detail of an input point of an embodiment of the invention in a first operating phase and sectioned in the vertical plane,
Fig. 3 presents a detail of an input point of an embodiment of the invention in a second operating phase and sectioned in the vertical plane,
Fig. 4 presents a detail of an input point of an embodiment of the invention in a third operating phase and sectioned in the vertical plane,
Fig. 5 presents a detail of an input point of an embodiment of the invention in a fourth operating phase and sectioned in the vertical plane, and
Fig. 6 presents an input point of an embodiment of the invention with the side wall and rear wall removed and with the channel part partially sectioned.

### Detailed description of the invention

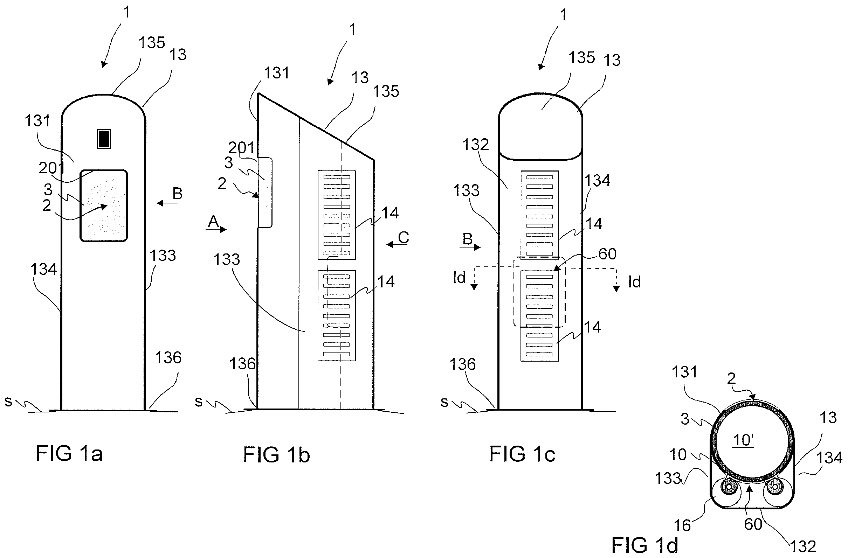

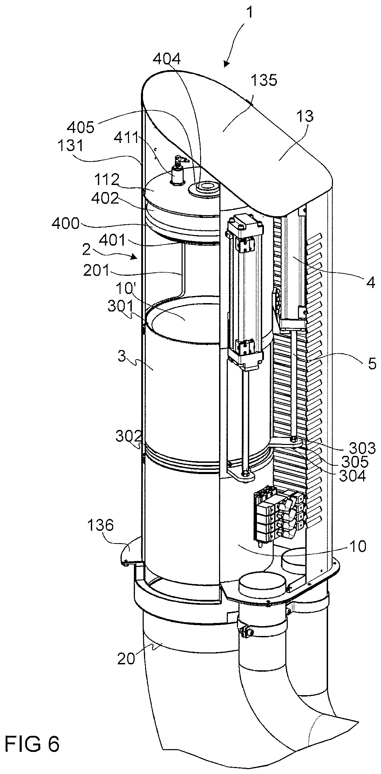

Figs. 1a-1c present an input point 1 of a pneumatic pipe transport system for wastes. In Fig. 1a the input point 1 is presented from the front, from the direction of the arrow A of Fig. 1b. In Fig. 1b the input point 1 is presented from the side, from the direction of the arrow B of Fig. 1a and in Fig. 1c from the rear, from the direction of the arrow C of Fig. 1b. The input point 1 comprises an enclosure 13, which forms the walls 131, 132, 133, 134, 135 of the input point. An input aperture 2 is formed in the enclosure of the input point, in the figure in the front wall 131 of it. A shut-off means 3 is arranged in connection with the input aperture 2, which can be moved between at least two positions, a first position, in which it prevents the feeding in of material to inside the enclosure of the input point via the input aperture 2, and a second position, in which the input aperture 2 is open. In the embodiment of Figs. 1a, 1b, 1c, 1d the front wall 131 of the input point 1 is formed to be curved. The front wall connects the side walls 133, 134. The rear wall 132 of the input point connects the side walls 133, 134 from the opposite side with respect to the front wall 131. The top wall 135 of the input point is formed in the embodiment of the figure to be sloping from the front wall side downwards towards the rear wall. In the embodiment of the figure there is a fixing point 136 in the bottom part of the input point, from which fixing point the input point can be fixed to its mounting surface s, such as to the ground surface, floor surface or corresponding. Apertures 14 are arranged or formed in the enclosure 13 of an input point 1, in the figure in a grating or grille, e.g. for conducting replacement air to inside the enclosure 13 of the input point. Inside an input point is a vertical channel part 10, which can be connected at its bottom part to a material conveying channel 20 (Fig. 6), such as to an intermediate container or to conveying piping.

The input point is arranged with a fixing part 136 onto its mounting surface. The feed-in container 10, which in the figure is a vertical channel part, of an input point is connected at its bottom part to a material conveying channel 20. An input point thus has a vertical channel part 10, in the wall of which an aperture 201 is formed at the point of the input aperture 2 of the input point. In the embodiment of the figure, the aperture 201 is of mainly rectangular shape with rounded corners. The aperture 201 of the channel part can be an input aperture 2 at least in an embodiment in which the channel part 10 forms the outer wall, or part thereof, of the input point. Since the wall of the channel section 10 in the embodiment of the figure is ring-like, more particularly a circle, in its cross-sectional shape in the sectioning direction of the plane that is orthogonal to its longitudinal axis, the aperture is therefore in a curved wall type of envelope. Depending on the embodiment, the cross-sectional shape of the channel can be also of some other shape, such as an ellipse, a polygon or some other suitable shape.

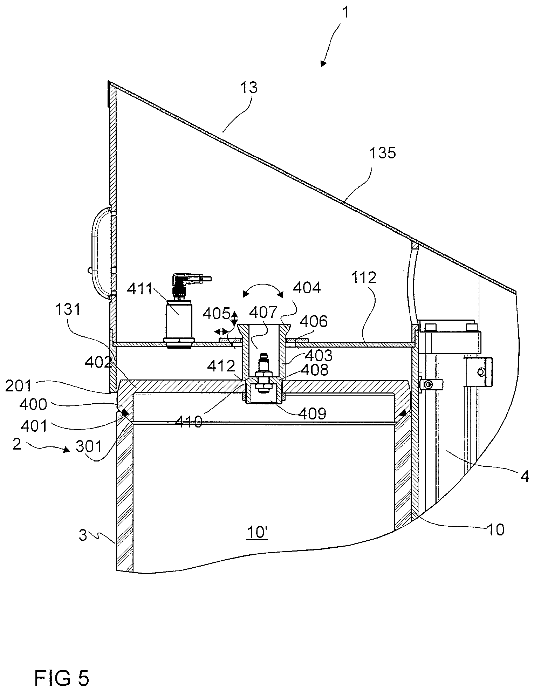

The channel part 10 is closed at the top part with a wall 112 and is connected at the bottom part to a material conveying channel 20. A first shut-off means 3, and its drive means 4, 5 are arranged in an input point 1, which first shut-off means in a first position is adapted to close, at least together with the counterpart 400 (Fig. 5), the connection via the input aperture 2 to inside the input point, into the feed-in container of it, which is in the space bounded by the channel part 10. The first shut-off means 3 has a second position (Fig. 6), in which the shut-off means 3 does not prevent the feeding of material via the input aperture 2 into the feed-in container bounded by the channel space of the channel part. In the embodiment of Fig. 6 the second position of the first shut-off means is downwards from the first position.

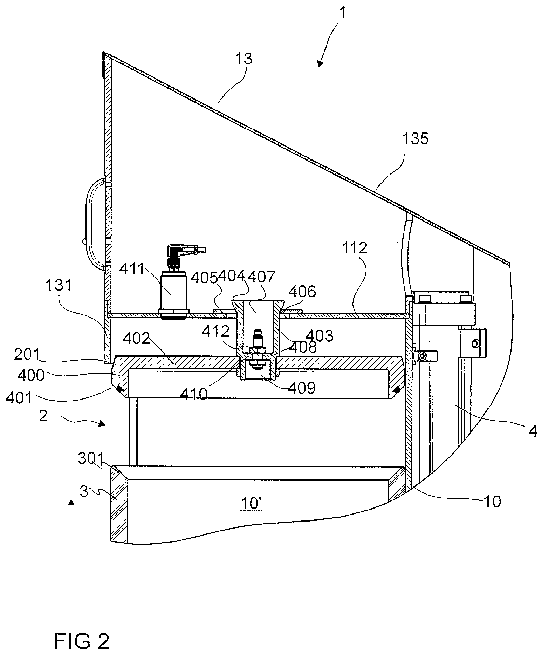

The first shut-off means 3 is arranged according to the embodiment of Figs. 2, 3, 4, 5, 6 and 1d inside the space bounded by the walls of the channel part 10. The outer wall of the first shut-off means 3 is directed towards the inner wall of the channel part 10. In the figure the first shut-off means is a ring-like shut-off means in its cross-sectional shape. According to one embodiment the first shut-off means is a bushing means. According to one embodiment the shut-off means is a mainly tubular means.

A bevel sloping inwards in the radial direction is formed in the top part 301 of the first shut-off means 3. It is adapted to suit the body of the input point 1, such as a counterpart 400, such as a cover part, arranged movably on the wall 112, together with the countersurface 401, which in the embodiment of Fig. 2 and 5 is formed in the height direction to some extent towards the center part of the input aperture from the top part of the edge of the input aperture 2 or of the aperture 201 of the channel part.

Figs. 2, 3, 4 and 5 present a detail of the sectioned top part of an input point. In the figures, a counterpart 400, such as a cover part, is arranged in a movable and supported manner on the body of the input point, such as on a wall 112 arranged transversely to the channel part. In Figs. 2, 5 the surface, or part thereof, of the moving counterpart 400 pointing downwards forms a countersurface 401 for the top surface 301, or part thereof, of the shut-off means when the shut-off means is in the first position (Fig. 5), in which the shut-off means 3, together with the counterpart 400, closes the input aperture 2.

The drive means 4, 5 of the first shut-off means 3 in the embodiment of Figs. 2, 3, 4, 5, and 6 comprise an actuator, such as a cylinder-piston combination. A piston is arranged in the cylinder space of the cylinder 4, the piston rod 5 (Fig. 6) of which piston is fixed at its opposite end with respect to the piston to the shut-off means 3 with a coupling arrangement. In the embodiment of Fig. 6 a support part 303 is arranged on the bottom part 302 of the shut-off means, which support part extends to outside the wall of the channel part. The support part 303 is arranged on the piston rod 5 with a fixing part 304. The moving means of the first shut-off means can optionally also comprise a flexing arrangement 305. The flexing arrangement comprises a flexing means 305 arranged between the support part 303 and the fixing part 304. The flexing means 305 is adapted to displace the shut-off means 3 against the countersurface of the wall when displacing said shut-off means into the first position. At the same time, it functions, for its part, as a safety means and prevents the shut-off means from pressing tightly against the countersurface of the counterpart if there is an obstacle between the shut-off means 3 and the edge of the input aperture 2 or the countersurface of the wall. The flexing means 305 can be e.g. a spring means, such as a helical spring, arranged in connection with the support part and the fixing part. In the embodiment of Figs. 2-6 the inner surface of the channel part 10 functions as the guide surface of the first shut-off means 3. In the embodiment of Fig. 6 the support part 303 is arranged on the bottom part 302 of the first shut-off means 3, e.g. on the end surface of the shut-off means. In the embodiment of the figure, the support part 303 comprises a ring-like section, which is arranged on the bottom end surface of the shut-off means, and the actual support part extending outwards in the radial direction from the ring-like section. The support part extends from the aperture formed in the wall of the channel part, in the figure from the replacement-air aperture, to outside the channel section 10. The moving device 4, 5 of the first shut-off means 3 is arranged in the embodiment of the figures in the space between the outer wall of the channel section 10 and the enclosure 13 of the input point. The moving device is supported on the structures of the input point, e.g. on the wall of the channel section 10.

By arranging the first shut-off means 3 to be a ring-like means, such as a bushing means, an advantageous solution is achieved for moving the shut-off means in relation to the forces caused by the suction and by the transporting air flow that are brought about by a partial-vacuum generator of a material conveying system acting in the channeling of an input point of a pneumatic material conveying system. With the arrangement relatively small surface areas are in practice achieved in the shut-off means, on which surface areas the resultant of the forces of the pressure difference act (because some of the radial forces acting on the rim of a ring-like bushing means compensate others). In this case it is possible to achieve a solution wherein the input aperture can be formed to be that desired in terms of its surface area and the actuator of the shut-off means can nevertheless be formed to be relatively small, owing to the relatively small forces needed according to the embodiment to move a bushing-type shut-off means.

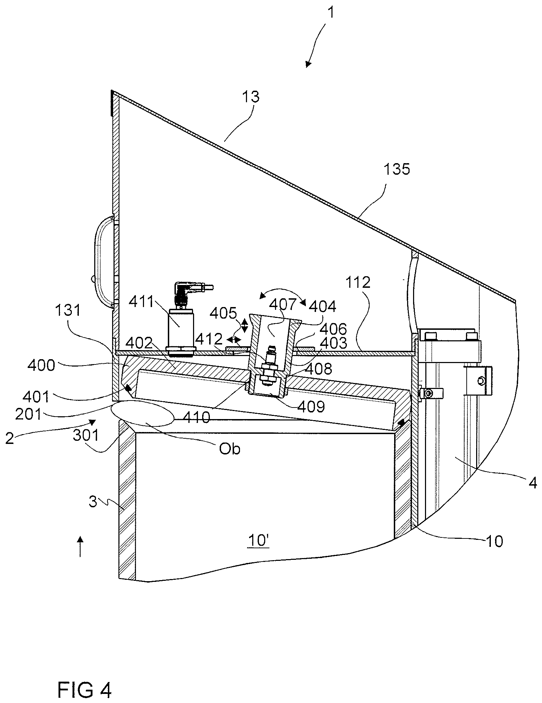

Figs. 2-6 present different operating phases, which describe the operation of the counterpart 400 in different situations. In the embodiment of the figures, the counterpart 400 comprises a body 402. The body 402 of the counterpart in the embodiment of the figures is a section mainly transverse with respect to the channel section 10 and an edge section extending from the transverse section towards the shut-off means 3. The edge section has a countersurface 401, which is adapted to suit the end surface 301 of the shut-off means 3. In the embodiment of the figures a sealing means is arranged on the countersurface 401 of the counterpart 400. A support part 403 is arranged on the body of the counterpart, which support part extends from the body 402 of the counterpart in the opposite direction with respect to the shut-off means 3. The support part 403 is arranged in a movable and supported manner on the body of the input point. In the embodiment of Figs. 2-5 the support part is movably supported on a wall arranged on the body, such as on a wall 112 enclosing the channel part 10. An aperture 406 is formed in the wall 112, through which aperture the support part 403 extends from the channel 10 side to the other side of the wall. A thicker point 404 is arranged in the support part 403 on the opposite end with respect to the body 402 of the counterpart and a counterpiece 405 on the opposite side of the wall 112 with respect to the channel part, by which counterpiece the support part 403 and the body part 402 are supported in the situation of Fig. 2. The counterpart 405 has an aperture, through which the bulge 404 of the support part does not fit, but instead the support part hangs supported by the counterpart, which is supported by resting on the wall 112. The aperture 406 formed in the wall 112 is to some extent larger in diameter than the diameter of the support part 403 or the dimensions of the support part 403 at the point of the aperture 406, in which case the support part 403 can move together with the counterpiece 405 while supported by the wall 112 within the scope of the clearance between the aperture 406 and the support part 403. In addition the support part 403 and the body 402 of the counterpart can move in the embodiment of the figure in at least one transverse direction with respect to the wall 112 and to the counterpiece. According to Fig. 4 the counterpart 400 can also turn, i.e. settle at an angle with respect to the plane of the wall 112 or with respect to a plane parallel with said wall. The support part 403 is arranged in an aperture 410 formed in the body 402 of the counterpart with fixing means, e.g. with nuts, with which the support part is tightened to the body 402 of the counterpart when the body remains between the shoulder of the support part and a nut.

The operation of the counterpart 402 and the shut-off means is presented in the operating states of Figs. 2-5.

Fig. 2 presents a situation in which the shut-off means 3 approaches the counterpart 400 to close the input aperture 2 and the connection to the channel space 10' of the channel part 10. The counterpart 400 hangs from the support part 403 while supported by the counterpiece 405. If all goes as desired, and there are no undesired objects Ob between the top part 311 of the shut-off means 3 and the countersurface 401 of the counterpart 400, the situation in Fig. 5 is arrived at wherein the shut-off means and the counterpart together close the pathway of the input aperture into the channel space of the channel part.

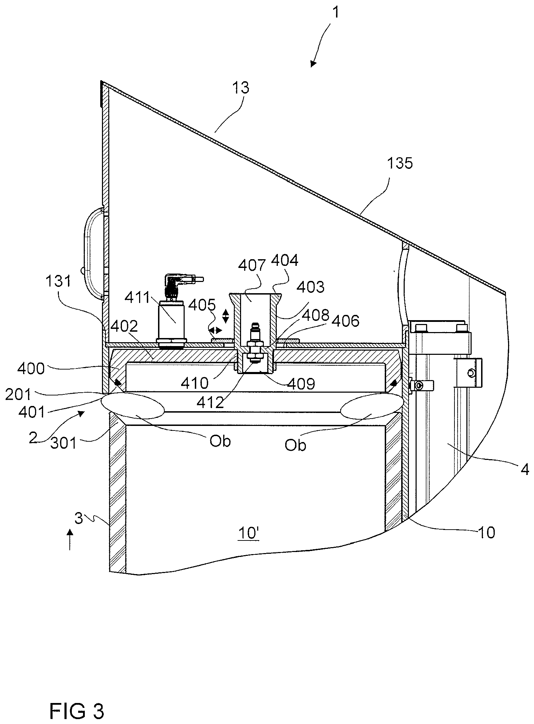

In the situation of Fig. 3 one or more undesired objects Ob is/are between the top part 311 of the shut-off means 3 and the countersurface 401 of the counterpart 400, the counterpart 400 rises in relation to its support point, i.e. in Fig. 3 in relation to the wall 112, moved by the shut-off means 3 and the object Ob. In this case the sensor 411, limit switch or corresponding control means gives a signal, which acts on the drive means 4 of the shut-off means 3 and stops the movement of the shut-off means 3 towards the first position. This functions as a safety arrangement, wherein an undesired object Ob does not remain compressed with the top part 311 of the shut-off means 3 and the counterpart 400 or the edge 211 of the input aperture 2.

In the situation of Fig. 4 the undesired object Ob is near the edge of the input aperture and the counterpart has turned owing to the undesired object Ob and the movement of the shut-off means. In this case the sensor 411, limit switch or corresponding control means gives a signal, which acts on the drive means 4 of the shut-off means 3 and stops the movement of the shut-off means 3 towards the first position. This functions as a safety arrangement, wherein an undesired object Ob does not remain compressed with the top part 311 of the shut-off means 3 and the counterpart 400 or the edge 211 of the input aperture 2.

The sensor 411 can be e.g. a sensor measuring distance, which gives a signal if the counterpart 400 is closer to the measuring point than a set value, or if the counterpart is displacing into an undesired area.

The support part 403 of the counterpart in the embodiment of Figs. 2-5 comprises an installation point for a second sensor 412, by means of which e.g. the filling degree of an input point, or whether material has been fed into the input point, is determined. The second sensor is arranged on a fixing point arranged on a neck 408 between a first bore 407 and a second bore 408. The sensor 412 can be any suitable sensor whatsoever, such as e.g. an ultrasound sensor or optical sensor.

In Fig. 5 the shut-off means 3 has displaced into the first position, in which the top part 311 of the shut-off means 3 is against the countersurface of the counterpart 400. In the embodiment of the figure, the counterpart 400 forms a lid for the tubular shut-off means 3. The shut-off means 3 and the counterpart 400 together close the input aperture 2 and the connection into the container space, i.e. into the channel space 10', of the input point 1.

Fig. 6 further presents an embodiment of an input point. In the figure the shut-off means 3 is in the second position, in which the input aperture 2 is open and material can be fed into the channel space 10' of the channel part via the input aperture. The figure presents one embodiment of the drive means, described earlier, of the shut-off means 3.

The drive means of the shut-off means 3 can, in terms of their operating principle, be e.g. electrically-operated actuators, hydraulic actuators, pneumatic actuators or some other suitable actuators, depending on the application.

The actuator of the first shut-off means 3 can be e.g. a medium-driven cylinder-piston unit or e.g. an electrically-operated drive device.

The operation of a pneumatic wastes conveying system is not described in more detail here. Various examples of pneumatic wastes transporting systems are presented generally, e.g. in publications WO 2009/080880, WO 2009/080881, WO 2009/080882, WO 2009/080883, WO 2009/080884, WO 2009/080885, WO 2009/080886, WO 2009/080887, WO 2009/080888, and WO/2011/110740.

The invention thus relates to a method for feeding in and for handling material in the input point of a pneumatic wastes conveying system, in which method waste material or recyclable material is fed into an input point from the input aperture 2 of the input point 1 of a pneumatic pipe transport system for material, from where the material is conveyed along with the transporting air via a material conveying pipe to the delivery end of the pneumatic material conveying system, where the material is separated from the transporting air. An input point 1 comprises a channel part 10, in the wall of which an aperture 201 is formed for feeding material into the channel part via the input aperture 2, and that in the method the input aperture of the input point is opened and closed with a first shut-off means 3, which is fitted inside the channel part 10 arranged in the input point movably between at least one first position, in which the connection for feeding in material via the input aperture 2 is closed, and at least one second position, in which the connection for feeding in material via the input aperture 2 is open, and in which method the first shut-off means 3 is placed against the counterpart 400 in the first position, supported movably with respect to the body of the input point.

According to one embodiment the movement of the shut-off means 3 is controlled by means of an impulse given by a sensor 411, limit switch or corresponding control means reacting to the position of the movably supported counterpart 400.

According to one embodiment the movably supported counterpart 400 is supported movably in the direction of movement of the shut-off means 3.

According to one embodiment the movably supported counterpart 400 is supported on the body of the input point movably in the transverse direction with respect to the movement direction of the shut-off means 3.

According to one embodiment the counterpart 400 is supported on the body of the input point in a turnable manner.

According to one embodiment the movably supported counterpart 400 moves always when an undesired object Ob is between the first shut-off means 3 and the movably supported counterpart 400, and when the first shut-off means 3 is moved towards the first position.

According to one embodiment the combination of the movably supported counterpart 400 and the sensor 411, limit switch or corresponding control means reacting to its position is applied as the safety arrangement means of the shut-off means 3 of the input point.

According to one embodiment the filling degree of an input point, or at least whether material has been fed into the input point, is determined with a second sensor 412, which is arranged on the counterpart 400.

According to one embodiment a support part 303 is arranged on the first shut-off means 3, which support part extends from the channel space 10' of the channel part 10 to outside the channel part via an aperture formed in the wall of the channel part 10, and that the first shut-off means is moved with moving means from the support part 303.

The invention also relates to an input point 1 of a pneumatic material conveying system, which input point comprises an input aperture 2 for feeding material to inside the input point from outside the input point, means 3 for opening and closing the input aperture. The input point 1 comprises a channel part 10, in the wall of which an aperture is formed for feeding material into the channel space 10' of the channel part 10 via the input aperture 2, that the means for opening and closing the input aperture 2 comprise a first shut-off means 3, which first shut-off means is fitted inside the channel part 10 movably between at least one first position, in which the connection for feeding in material via the input aperture 2 is closed, and at least one second position, in which the connection for feeding in material via the input aperture 2 is open, and that the input point 1 comprises a counterpart 400 supported movably with respect to the body of the input point, against which counterpart the first shut-off means 3 is adapted to settle in the first position.

According to one embodiment the first shut-off means is a bushing means.

According to one embodiment an input point comprises a sensor 411, limit switch or corresponding control means, adapted for reacting to the position of the movably supported counterpart 400, for controlling and/or stopping the movement of the first shut-off means 3.

According to one embodiment the movably supported counterpart 400 is supported on the body of the input point in a turnable manner.

According to one embodiment the movably supported counterpart 400 is supported on the body of the input point movably in the movement direction of the shut-off means 3 and/or movably in the transverse direction with respect to the movement direction of the shut-off means.

According to one embodiment the movably supported counterpart 400 is adapted to move always when an undesired object Ob is between the first shut-off means 3 and the movably supported counterpart 400, such as a cover part, when the first shut-off means is moved towards the first position.

According to one embodiment the combination of the movably supported counterpart 400 and the sensor 411, limit switch or corresponding control means reacting to its position is adapted to become the safety arrangement means of the shut-off means 3 of the input point.

According to one embodiment an installation point for a second sensor 412 is arranged on the counterpart 400, e.g. for a sensor determining the degree of filling of the input point.

According to one embodiment a support part 303 is arranged on the first shut-off means 3, which support part extends from the channel space 10' of the channel part 10 to outside the channel part via an aperture formed in the wall of the channel part 10, and that the moving means of the first shut-off means 3 is adapted to move the first shut-off means from the support part 303.

The invention also provides a wastes conveying system, which comprises an input point according to any of claims 1-8.

Typically the material is waste material, such as waste material arranged in bags. The input point can be adapted to be a part of a pneumatic waste conveying system or it can be a separate part, in which waste material is conducted into the waste room, waste container or corresponding.

It is obvious to the person skilled in the art that the invention is not limited to the embodiments presented above, but that it can be varied within the scope of the claims presented below. The characteristic features possibly presented in the description in conjunction with other characteristic features can also, if necessary, be used separately to each other.

## Claims

1. Input point (1) for a pneumatic waste material conveying system, which input point comprises an input aperture (2) for feeding material to inside the input point from outside the input point, means (3) for opening and closing the input aperture, and the input point (1) comprises a vertical channel part (10), which can be connected at its bottom part to a material conveying channel, in the wall of the channel part (10) an aperture (201) is formed for feeding material into a channel space (10') of the channel part (10) via the input aperture (2) or the aperture (201) of the channel part (10) can be the input aperture in an embodiment in which the channel part forms an outer wall, or part thereof, of the input point, and that the means for opening and closing the input aperture (2) comprise a shut-off means (3), which shut-off means is fitted inside the channel part (10) movably in the direction of the channel part between at least one first position, in which a connection for feeding in material via the input aperture (2) is closed, and at least one second position, in which the connection for feeding in material via the input aperture (2) is open, **characterized in that** the input point (1) comprises a counterpart (400) supported movably on the input point or on the structures of the input point, on which counterpart is a countersurface for the shut-off means and against which counterpart the shut-off means (3) is adapted to settle in the first position.

2. Input point according to claim 1, **characterized in that** the input point comprises a sensor (411), limit switch or corresponding control means, adapted for reacting to the position of the movably supported counterpart (400), for controlling and/or stopping the movement of the shut-off means (3).

3. Input point according to claim 1 or 2, **characterized in that** the movably supported counterpart (400) is supported on the body of the input point in a turnable manner.

4. Input point according to any of claims 1 - 3, **characterized in that** the movably supported counterpart (400) is supported on the body of the input point movably in the movement direction of the shut-off means (3) and/or movably in the transverse direction with respect to the movement direction of the shut-off means.

5. Input point according to any of claims 1 - 4 **characterized in that** the movably supported counterpart (400) is adapted to move when an undesired object (Ob) is between the shut-off means (3) and the movably supported counterpart (400), such as a cover part, when the shut-off means is moved towards the first position.

6. Input point according to any of claims 1 - 5, **characterized in that** the combination of the movably supported counterpart (400) and the sensor (411), limit switch or corresponding control means reacting to the position of said counterpart, is a safety arrangement means of the shut-off means (3) of the input point.

7. Input point according to any of claims 1 - 6, **characterized in that** an installation point for a second sensor (412) is arranged in the counterpart (400), e.g. for a sensor determining the degree of filling of the input point.

8. Input point according to any of claims 1 - 7, **characterized in that** a support part (303) is arranged on the shut-off means (3), which support part extends from the channel space (10') of the channel part (10) to outside the channel part via an aperture formed in the wall of the channel part (10), and **in that** the moving means of the shut-off means (3) is adapted to move the shut-off means with the support part (303).

9. Wastes conveying system, which comprises an input point according to any of claims 1- 8.

10. Method for feeding in and for handling material in an input point for a pneumatic waste material conveying system according to claim 1 comprising the following steps: feeding waste material or recyclable material into a channel space (10') of the channel part via the input aperture (2), conveying the material from the input point along with the transporting air via a material conveying pipe to the delivery end of the pneumatic waste material conveying system, where the material is separated from the transporting air, and wherein in the method the input aperture of the input point is opened and closed with a shut-off means (3), which is fitted inside the channel part (10) and moved between at least one first position, in which a connection for feeding in material via the input aperture (2) is closed, and at least one second position, in which the connection for feeding in material via the input aperture (2) is open, **characterized in that** in the method the shut-off means (3) is placed in the first position against a counterpart (400) that is supported movably with respect to a body of the input point.

11. Method according to claim 10, **characterized in that** the movement of the shut-off means (3) is controlled by means of an impulse given by a sensor (411), limit switch or corresponding control means reacting to the position of the movably supported counterpart (400).

12. Method according to claim 10 or 11, **characterized in that** the movably supported counterpart (400) is supported movably in the direction of movement of the shut-off means (3).

13. Method according to any of claims 10 - 12, **characterized in that** the movably supported counterpart (400) is supported on the body of the input point movably in the transverse direction with respect to the movement direction of the shut-off means (3).

14. Method according to any of claims 10 - 13, **characterized in that** the counterpart (400) is supported on the body of the input point in a turnable manner.

15. Method according to any of claims 10 - 14, **characterized in that** the movably supported counterpart (400) moves when an undesired object (Ob) is between the shut-off means (3) and the movably supported counterpart (400), and when the shut-off means (3) is moved towards the first position.

16. Method according to any of claims 10 - 15, **characterized in that** the combination of the movably supported counterpart (400) and the sensor (411), limit switch or corresponding control means reacting to the position of said counterpart, is applied as a safety arrangement means of the shut-off means (3) of the input point.

17. Method according to any of claims 10 - 16, **characterized in that** the filling degree of an input point, or at least whether material has been fed into the input point, is determined with a second sensor (412), which is arranged on the counterpart (400).

18. Method according to any of claims 10 - 17, **characterized in** a support part (303) is arranged on the shut-off means (3), which support part extends from the channel space (10') of the channel part (10) to outside the channel part via an aperture formed in the wall of the channel part (10), and **in that** the shut-off means (3) is moved with moving means from the support part (303).

## Patentansprüche

1. Einspeisestelle (1) für ein pneumatisches Abfallfördersystem, wobei die Einspeisestelle eine Einspeiseöffnung (2) zum Zuführen von Material in das Innere der Einspeisestelle von außerhalb der Einspeisestelle, sowie Mittel (3) zum Öffnen und Schließen der Einspeiseöffnung umfasst, und die Einspeisestelle (1) einen vertikalen Kanalteil (10) umfasst, der an seinem unteren Teil mit einem Materialförderkanal verbunden werden kann,
wobei in der Wand des Kanalteils (10) eine Öffnung (201) zum Zuführen von Material in einen Kanalraum (10') des Kanalteils (10) über die Einspeiseöffnung (2) ausgebildet ist oder
die Öffnung (201) des Kanalteils (10) die Einspeiseöffnung in einer Ausführungsform sein kann, in der der Kanalteil eine Außenwand, oder einen Teil davon, der Einspeisestelle bildet und wobei weiterhin die Mittel zum Öffnen und Schließen der Einspeiseöffnung (2) ein Absperrmittel (3) umfassen, wobei das Absperrmittel innerhalb des Kanalteils (10) beweglich in Richtung des Kanalteils zwischen mindestens einer ersten Position, in der eine Verbindung zum Zuführen von Material über die Einspeiseöffnung (2) geschlossen ist, und mindestens einer zweiten Position, in der die Verbindung zur Materialzuführung über die Einspeiseöffnung (2) offen ist, angebracht ist, **dadurch gekennzeichnet, dass** die Einspeisestelle (1) ein an der Einspeisestelle oder an den Strukturen der Einspeisestelle beweglich gelagertes Gegenstück (400) aufweist, an dem sich eine Gegenfläche für das Absperrmittel befindet und gegen das das Absperrmittel (3) in der ersten Position anlegbar ist.

2. Einspeisestelle nach Anspruch 1, **dadurch gekennzeichnet, dass** die Einspeisestelle einen Sensor (411), Endschalter oder entsprechende Steuermittel umfasst, die geeignet sind, auf die Position des beweglich gelagerten Gegenstücks (400) zu reagieren, um die Bewegung des Absperrmittels (3) zu steuern und/oder anzuhalten.

3. Einspeisestelle nach Anspruch 1 oder 2, **dadurch gekennzeichnet, dass** das beweglich gelagerte Gegenstück (400) drehbar am Körper der Einspeisestelle gelagert ist.

4. Einspeisestelle nach einem der Ansprüche 1 bis 3, **dadurch gekennzeichnet, dass** das beweglich gelagerte Gegenstück (400) am Körper der Einspeisestelle in Bewegungsrichtung des Absperrmittels (3) beweglich gelagert und/oder in Querrichtung zur Bewegungsrichtung des Absperrmittels beweglich gelagert ist.

5. Einspeisestelle nach einem der Ansprüche 1 bis 4, **dadurch gekennzeichnet, dass** das beweglich gelagerte Gegenstück (400) dazu eingerichtet ist, sich zu bewegen, wenn sich ein unerwünschtes Objekt (Ob) zwischen dem Absperrmittel (3) und dem beweglich gelagerten Gegenstück (400) befindet, wie z.B. ein Abdeckteil, wenn das Absperrmittel in Richtung der ersten Position bewegt wird.

6. Einspeisestelle nach einem der Ansprüche 1 bis 5, **dadurch gekennzeichnet, dass** die Kombination aus dem beweglich gelagerten Gegenstück (400) und dem auf die Position des Gegenstücks reagierenden Sensor (411), Endschalter oder den entsprechenden Steuermitteln eine Sicherheitseinrichtung des Absperrmittels (3) der Einspeisestelle ist.

7. Einspeisestelle nach einem der Ansprüche 1 bis 6, **dadurch gekennzeichnet, dass** im Gegenstück (400) eine Einbaustelle für einen zweiten Sensor (412) angeordnet ist, z.B. für einen Sensor, der den Füllungsgrad der Einspeisestelle ermittelt.

8. Einspeisestelle nach einem der Ansprüche 1 bis 7, **dadurch gekennzeichnet, dass** ein Stützteil (303) an dem Absperrmittel (3) angeordnet ist, das sich von dem Kanalraum (10') des Kanalteils (10), über eine in der Wand des Kanalteils (10) ausgebildete Öffnung, nach außen erstreckt, und dass die Bewegungsmittel des Absperrmittels (3) geeignet sind, das Absperrmittel mit dem Stützteil (303) zu bewegen.

9. Abfallfördersystem, das eine Einspeisestelle nach einem der Ansprüche 1 bis 8 umfasst.

10. Verfahren zum Einspeisen und zum Fördern von Material in einer Einspeisestelle für ein pneumatisches Abfallfördersystem nach Anspruch 1, umfassend die folgenden Schritte:
Einspeisen von Abfall- oder Wertstoffen in einen Kanalraum (10') des Kanalteils über die Einspeiseöffnung (2), Fördern des Materials von der Einspeisestelle zusammen mit der Förderluft über eine Materialförderleitung zum Abgabeende des pneumatischen Abfallfördersystems, wo das Material von der Förderluft getrennt wird, und
wobei bei dem Verfahren die Einspeiseöffnung der Einspeisestelle mit einem Absperrmittel(3) geöffnet und geschlossen wird, das innerhalb des Kanalteils (10) angebracht ist und zwischen mindestens einer ersten Position, in der eine Verbindung zum Zuführen von Material über die Einspeiseöffnung (2) geschlossen ist, und mindestens einer zweiten Position, in der die Verbindung zum Zuführen von Material über die Einspeiseöffnung (2) offen ist, bewegt wird, **dadurch gekennzeichnet, dass**
bei dem Verfahren das Absperrmittel (3) in der ersten Position an ein Gegenstück (400) angelegt wird, das in Bezug auf einen Körper der Einspeisestelle beweglich gelagert ist.

11. Verfahren nach Anspruch 10, **dadurch gekennzeichnet, dass** die Bewegung des Absperrmittels (3) mittels eines Impulses gesteuert wird, der von einem Sensor (411), Endschalter oder von entsprechenden Steuermitteln gegeben wird, die auf die Position des beweglich gelagerten Gegenstücks (400) reagieren.

12. Verfahren nach Anspruch 10 oder 11, **dadurch gekennzeichnet, dass** das beweglich gelagerte Gegenstück (400) in Bewegungsrichtung des Absperrmittels (3) beweglich gelagert ist.

13. Verfahren nach einem der Ansprüche 10 bis 12, **dadurch gekennzeichnet, dass** das beweglich gelagerte Gegenstück (400) am Körper der Eingangsstelle quer zur Bewegungsrichtung des Absperrmittels (3) beweglich gelagert ist.

14. Verfahren nach einem der Ansprüche 10 bis 13, **dadurch gekennzeichnet, dass** das Gegenstück (400) an dem Körper der Einspeisestelle drehbar gelagert ist.

15. Verfahren nach einem der Ansprüche 10 bis 14, **dadurch gekennzeichnet, dass** sich das beweglich gelagerte Gegenstück (400) bewegt, wenn sich ein unerwünschtes Objekt (Ob) zwischen dem Absperrmittel (3) und dem beweglich gelagerten Gegenstück (400) befindet, und wenn das Absperrmittel (3) in Richtung der ersten Position bewegt wird.

16. Verfahren nach einem der Ansprüche 10 bis 15, **dadurch gekennzeichnet, dass** die Kombination aus dem beweglich gelagerten Gegenstück (400) und dem auf die Position des Gegenstücks reagierenden Sensor (411), Endschalter oder den entsprechenden Steuermitteln als Sicherheitseinrichtung des Absperrmittels (3) der Eingangsstelle eingesetzt wird.

17. Verfahren nach einem der Ansprüche 10 bis 16, **dadurch gekennzeichnet, dass** mit einem zweiten Sensor (412), der am Gegenstück (400) angeordnet ist, der Füllungsgrad einer Einspeisestelle, oder zumindest ob Material in die Einspeisestelle eingespeist wurde, ermittelt wird.

18. Verfahren nach einem der Ansprüche 10 bis 17, **dadurch gekennzeichnet, dass** an dem Absperrmittel (3) ein Trägerteil (303) angeordnet ist, das sich vom Kanalraum (10') des Kanalteils (10) über eine in der Wand des Kanalteils (10) ausgebildete Öffnung nach außerhalb des Kanalteils erstreckt, und dass das Absperrmittel (3) mit Bewegungsmitteln von dem Trägerteil (303) bewegt wird.

## Revendications

1. Point d'entrée (1) pour un système de transport de matériau de déchet pneumatique, lequel point d'entrée comprend une ouverture d'entrée (2) pour amener du matériau à l'intérieur du point d'entrée depuis l'extérieur du point d'entrée, des moyens (3) pour ouvrir et fermer l'ouverture d'entrée, et le point d'entrée (1) comprend une partie de canal verticale (10) qui peut être reliée, à sa partie inférieure, à un canal de transport de matériau, dans la paroi de la partie de canal (10) une ouverture (201) est formée pour amener du matériau dans un espace de canal (10') de la partie de canal (10) via l'ouverture d'entrée (2) ou l'ouverture (201) de la partie de canal (10) peut être l'ouverture d'entrée dans un mode de réalisation dans lequel la partie de canal forme une paroi extérieure, ou une partie de celle-ci, du point d'entrée, et que les moyens pour ouvrir et fermer l'ouverture d'entrée (2) comprennent des moyens d'arrêt (3), lesquels moyens d'arrêt (3) sont montés à l'intérieur de la partie de canal (10) de manière mobile dans la direction de la partie de canal entre au moins une première position, dans laquelle une liaison pour amener du matériau via l'ouverture d'entrée (2) est fermée, et au moins une deuxième position, dans laquelle la liaison pour amener du matériau via l'ouverture d'entrée (2) est ouverte, **caractérisé en ce que** le point d'entrée (1) comprend un homologue (400) supporté de manière mobile sur le point d'entrée ou sur les structures du point d'entrée, sur lequel homologue se trouve une contre-surface pour les moyens d'arrêt et contre laquelle les moyens d'arrêt (3) sont adaptés pour se fixer dans la première position.

2. Point d'entrée selon la revendication 1, **caractérisé en ce que** le point d'entrée comprend un capteur (411), interrupteur limite ou moyens de commande correspondants, adapté pour réagir à la position de l'homologue (400) supporté de manière mobile, pour commander et/ou arrêter le mouvement des moyens d'arrêt (3).

3. Point d'entrée selon la revendication 1 ou 2, **caractérisé en ce que** l'homologue (400) supporté de manière mobile est supporté sur le corps de l'ouverture d'entrée d'une manière rotative.

4. Point d'entrée selon l'une quelconque des revendications 1-3, **caractérisé en ce que** l'homologue (400) supporté de manière mobile est supporté sur le corps du point d'entrée de manière mobile dans la direction de mouvement des moyens d'arrêt (3) et/ou de manière mobile dans la direction transversale par rapport à la direction de mouvement des moyens d'arrêt.

5. Point d'entrée selon l'une quelconque des revendications 1-4, **caractérisé en ce que** l'homologue (400) supporté de manière mobile est adapté pour se déplacer quand un objet indésirable (Ob) se trouve entre les moyens d'arrêt (3) et l'homologue (400) supporté de manière mobile, telle qu'une partie de couvercle, quand les moyens d'arrêt sont déplacés vers la première position.

6. Point d'entrée selon l'une quelconque des revendications 1-5, **caractérisé en ce que** la combinaison de l'homologue (400) supporté de manière mobile et du capteur (411), interrupteur limite ou moyens de commande correspondants réagissant à la position du dit homologue, est un moyen de dispositif de sécurité des moyens d'arrêt (3) du point d'entrée.

7. Point d'entrée selon l'une quelconque des revendications 1-6, **caractérisé en ce qu'**un point d'installation pour un deuxième capteur (412) est disposé dans l'homologue (400), par exemple pour un capteur déterminant le degré de remplissage du point d'entrée.

8. Point d'entrée selon l'une quelconque des revendications 1-7, **caractérisé en ce qu'**une partie de support (303) est disposée sur les moyens d'arrêt (3), laquelle partie de support s'étend de l'espace de canal (10') de la partie de canal (10) jusqu'à l'extérieur de la partie de canal via une ouverture formée dans la paroi de la partie de canal (10), et **en ce que** les moyens de déplacement des moyens d'arrêt (3) sont adaptés pour déplacer les moyens d'arrêt avec la partie de support (303).

9. Système de transport de déchets, qui comprend un point d'entrée selon l'une quelconque des revendications 1-8.

10. Procédé pour amener et manipuler du matériau dans un point d'entrée pour un système de transport de matériau de déchet pneumatique selon la revendication 1 comprenant les étapes suivantes : amener du matériau de déchet ou du matériau recyclable dans un espace de canal (10') de la partie de canal via l'ouverture d'entrée (2), transporter le matériau du point d'entrée avec l'air de transport, via un tuyau de transport de matériau jusqu'à l'extrémité de déversement du système de transport de matériau de déchet pneumatique, où le matériau est séparé de l'air de transport, et dans lequel dans le procédé l'ouverture d'entrée du point d'entrée est ouverte et fermée avec des moyens d'arrêt (3), qui sont montés à l'intérieur de la partie de canal verticale (10) et sont déplacés entre au moins une première position, dans laquelle une liaison pour amener du matériau via l'ouverture d'entrée (2) est fermée, et au moins une deuxième position, dans laquelle la liaison pour amener du matériau via l'ouverture d'entrée (2) est ouverte,
**caractérisé en ce que** dans le procédé, les moyens d'arrêt (3) sont placés dans la première position contre un homologue (400) qui est supporté de manière mobile par rapport à un corps du point d'entrée.

11. Procédé selon la revendication 10, **caractérisé en ce que** le mouvement des moyens d'arrêt (3) est commandé à l'aide d'une impulsion donnée par un capteur (411), interrupteur limite ou moyens de commande correspondants réagissant à la position de l'homologue (400) supporté de manière mobile.

12. Procédé selon la revendication 10 ou 11, **caractérisé en ce que** l'homologue (400) supporté de manière mobile est supporté de manière mobile dans la direction de mouvement des moyens d'arrêt (3).

13. Procédé selon l'une quelconque des revendications 10-12, **caractérisé en ce que** l'homologue (400) supporté de manière mobile est supporté sur le corps du point d'entrée de manière mobile dans la direction transversale par rapport à la direction de mouvement des moyens d'arrêt (3).

14. Procédé selon l'une quelconque des revendications 10-13, **caractérisé en ce que** l'homologue (400) est supporté sur le corps du l'ouverture d'entrée d'une manière tournante.

15. Procédé selon l'une quelconque des revendications 10-14, **caractérisé en ce que** l'homologue (400) supporté de manière mobile se déplace quand un objet indésirable (Ob) se trouve entre les moyens d'arrêt (3) et l'homologue (400) supporté de manière mobile, et quand les moyens d'arrêt (3) sont déplacés vers la première position.

16. Procédé selon l'une quelconque des revendications 10-15, **caractérisé en ce que** la combinaison de l'homologue (400) supporté de manière mobile et du capteur (411), interrupteur limite ou moyens de commande correspondants réagissant à la position du dit homologue est appliquée comme moyen de dispositif de sécurité des moyens d'arrêt (3) du point d'entrée.

17. Procédé selon l'une quelconque des revendications 10-16, **caractérisé en ce que** le degré de remplissage d'un point d'entrée, ou au moins l'amenée ou non de matériau dans le point d'entrée, est déterminé avec un deuxième capteur (412), qui est disposé sur l'homologue (400).

18. Procédé selon l'une quelconque des revendications 10-17, **caractérisé en ce qu'**une partie de support (303) est disposée sur les moyens d'arrêt (3), laquelle partie de support s'étend de l'espace de canal (10') de la partie de canal (10) jusqu'à l'extérieur de la partie de canal via une ouverture formée dans la paroi de la partie de canal (10), et **en ce que** les moyens d'arrêt (3) sont déplacés avec des moyens de déplacement depuis la partie de support (303).
